(19) Europäisches Patentamt
European Patent Office
Office européen des brevets

(11) Numéro de publication : **0 441 717 A1**

# (12) DEMANDE DE BREVET EUROPEEN

(21) Numéro de dépôt : **91420022.5**

(22) Date de dépôt : **25.01.91**

(51) Int. Cl.[5] : **B29C 33/40,** C08K 5/54, // B29K83:00

(30) Priorité : **06.02.90 FR 9001586**

(43) Date de publication de la demande : **14.08.91 Bulletin 91/33**

(84) Etats contractants désignés : **ES FR GR IT**

(71) Demandeur : **RHONE-POULENC CHIMIE**
**25, quai Paul Doumer**
**F-92408 Courbevoie Cédex (FR)**

(72) Inventeur : **Molteni, Carlo**
**via Dei Bognetti, no 9**
**I-20141 Milano (IT)**

(74) Mandataire : **Trolliet, Maurice et al**
**RHONE-POULENC CHIMIE Service Brevets Chimie Centre de Recherches des Carrières**
**B.P. 62**
**F-69192 Saint-Fons Cédex (FR)**

## (54) Procédé de prise d'empreinte au moyen d'une composition élastomère silicone.

(57) La présente invention concerne un procédé de prise d'empreinte d'un objet au moyen d'une composition élastomère silicone réticulant par des réactions de polycondensation, caractérisé en ce qu'on enduit au préalable la surface de l'objet par une composition organopolysiloxane (A) diluée dans un solvant organique et comportant une gomme silicone, on laisse réticuler au moins partiellement la composition (A), on recouvre alors la surface ainsi traitée par ladite composition élastomère silicone réticulant par des réactions de polycondensation et on démoule la composition (C) durcie. Application notamment à la réalisation de moule d'objets anciens en bronze ou en pierre.



Jouve, 18, rue Saint-Denis, 75001 PARIS

# PROCEDE DE PRISE D'EMPREINTE AU MOYEN D'UNE COMPOSITION ELASTOMERE SILICONE

Les compositions élastomères silicones sont utilisées depuis longtemps pour la prise d'empreinte d'objets divers, à partir de laquelle on réalise un moule pour reproduire les objets.

Ces compositions élastomères silicones conviennent parfaitement pour réaliser des répliques fidèles d'objets anciens notamment en pierre ou en bronze, en particulier des sculptures. Les orginaux anciens sont alors conservés à l'abri des voleurs, des vandales, des intempéries et de la pollution atmosphérique dans un endroit sûr et les répliques remplacent les originaux. On peut citer comme exemple célèbre de réalisations de telles répliques, les Cheveaux de Marly à Paris.

Il existe toutefois une difficulté (problème) à résoudre.

Cette difficulté consiste dans le fait qu'une partie non négligeable de la composition élastomère, et en particulier de l'huile réactive silicone contenue dans la composition élastomère avant son durcissement, pénètre à l'intérieur de l'objet et reste dans l'objet après démoulage de l'élastomère après son durcissement.

La présence dans l'objet en particulier de cette huile silicone est particulièrement néfaste car elle peut être à l'origine de l'apparition de taches et de la prolifération de moisissures, champignons, etc ... qui risquent d'endommager l'objet. L'existence de ce problème diminue fortement voir bloque complètement, la réalisation de répliques d'objets anciens de valeur.

On a déjà proposé 2 types de solution pour résoudre ce problème.

Le premier type de solution consiste à revêtir au préalable la surface de l'objet par un revêtement non polluant, imperméable aux différents constituants de la composition élastomère silicone.

Cette solution présente l'inconvénient d'affecter fortement la qualité et la finesse de reproduction de la surface de l'objet.

Le deuxième type de solution consiste à revêtir au préalable l'objet par une couche d'un agent de démoulage choisi généralement parmi les alcools polyvinyliques, les solutions de savons, les esters d'acides gras, les dispersions organiques de cire et certains polymères organiques synthétiques.

Certains de ces agents de démoulage empêchent certes l'absorption des silicones, mais ils constituent eux-mêmes un polluant de l'objet au moins aussi indésirable que les silicones.

La présente invention a précisément pour but de résoudre le problème ci-dessus.

Ce but est atteint par la présente invention qui concerne en effet un procédé de prise d'empreinte d'un objet au moyen d'une composition élastomère silicone (C) réticulant par des réactions de condensation caractérisé en ce que :

a) on enduit au préalable la surface de l'objet à l'aide d'une composition organopolysiloxane (A) comportant :

A1) - 100 parties en poids d'une gomme polydiorganosiloxane de formule :

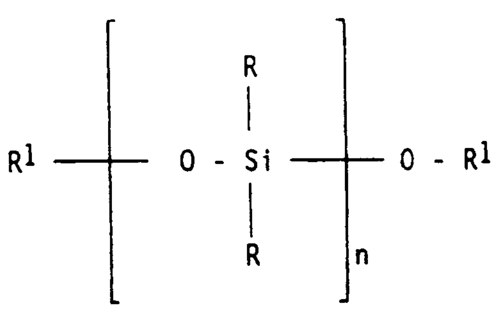

(I)

dans laquelle

– les radicaux R identiques ou différents représentent un radical hydrocarboné monovalent, au moins 80 % en nombre des radicaux R étant des radicaux méthyle ;

– les radicaux R1 sont choisis parmi un atome d'hydrogène et un radical alkyle en $C_1$-$C_4$ ;

– n est un nombre entier tel que la viscosité de la gomme de formule (1) soit supérieure à $10^6$ mPa.s à 25°C, de préférence supérieure à $10^7$ mPa.s.

A2) - 1 à 20 parties en poids d'un composé organosilicié polyalcoxylé choisi parmi

. un monomère de formule :

$$R_x\ Si\ \left[(OCH_2CH_2)_a\ OR^2\right]_{4-x} \qquad (II)$$

dans laquelle R a la signification donnée à la formule (I) ci-dessus, $R^2$ est choisi parmi un radical alkyle en $C_1$ - $C_4$, x représente 0 ou 1, a représente 0 ou 1 ;

. un polymère découlant de l'hydrolyse partielle du monomère de formule $Si(OR^2)_4$, le symbole $R^2$ ayant la signification donnée à la formule (II) ci-dessus.

A3) - Une quantité efficace d'un catalyseur organo- métallique de durcissement.

A4) - 200 à 2000 parties en poids de diluants organiques inertes vis-à-vis des composés A1) et A2).

b) On laisse réticuler au moins partiellement la composition (A).

c) On recouvre ensuite la surface revêtue de l'objet par ladite composition organopolysiloxane (C) réticulant par des réactions de polycondensation, et

d) on démoule la composition (C) durcie.

De façon surprenante et inattendue, on a pu en effet constater, lors de la mise en oeuvre du procédé de l'invention, qu'après avoir démoulé la composition (C) durcie au cours de l'étape finale d) la surface de l'objet est complètement exempte de silicone.

Sans vouloir limiter l'invention à une théorie scientifique, ce résultat surprenant serait dû au fait que la composition élastomère (A) ne pénètre pas à l'intérieur de la surface de l'objet du fait de la grande taille des macromolécules de gomme silicone A1) (étape a)).

Par ailleurs quand cette composition (A) est au moins partiellement réticulée (étape b)), la pellicule d'élastomère ainsi formée, constitue une barrière efficace contre la migration des huiles silicones de la composition silicone (c). En outre lors de la réticulation de la composition (C) (étape c)), la pellicule d'élastomère (A) adhère fortement à la couche d'élastomère (C), de telle sorte que, lors du démoulage final (étape d)) la totalité de l'élastomère (A) est arraché de la surface de l'objet et recouvre la surface interne du moule formé par la composition (C) réticulée.

Le moule reproduit en outre tous les détails, aspérités et creux de la surface de l'objet.

Le procédé de l'invention est également utilisable quand la surface de l'objet a été préalablement enduite d'une couche de résine synthétique consolidante par exemple de résine acrylique notamment de résine (méth)acrylate d'alkyle. En effet la pellicule (A) empêche les silicones d'arriver sur la couche de résine acrylique. Par ailleurs lors du démoulage final la couche de résine acrylique demeure bien à la surface de l'objet.

Les gommes silicones A1) répondant à la formule (I) sont des produits connus, commercialement disponibles auprès des fabricants de silicones.

Dans la formule (I), les radicaux hydrocarbonés R monovalents sont de préférence choisis parmi les radicaux, méthyle, éthyle, vinyle, phényle et trifluoro-3,3,3 propyle.

Les gommes préférées sont celles de formule (I) dans laquelle $R_1$ est H et R est un radical méthyle de viscosité supérieure à 10 millions de mPa.s à 25°C ($10^7$ mPa.s).

Comme composé A2) monomères utilisables répondant à la formule (II) on peut en particulier citer les silanes suivants : le méthyltriméthoxysilane, le méthyltriéthoxysilane, le méthyltriisopropoxysilane, le méthyltris-(β-méthoxyéthoxy)silane, l'éthyltriméthoxysilane, l'éthyltriéthoxysilane, le n-propyltriméthoxysilane, le n-propyltris-(β-méthoxyéthoxy)silane, l'hexyltriméthoxysilane, l'éthyl-2 hexyltriméthoxysilane, le vinyltriméthoxysilane, le vinyltriéthoxysilane, le cyclopentyltriméthoxysilane, le cyclohexyltriéthoxysilane, le diméthyl-2,3 cyclohexyltriméthoxysilane, le phényltriméthoxysilane, le phényltris(β-méthoxyéthoxy)silane, le silicate de méthyle, le silicate d'éthyle, le silicate de propyle, le silicate d'isopropyle, le silicate de butyle, le silicate de β-méthoxyéthyle, le silicate de β-éthoxyéthyle, les silicates mixtes de méthyle et d'éthyle, les silicates mixtes de méthyle et de butyle.

Les polymères A2) découlant de l'hydrolyse partielle des silicates de formule $Si(OR^2)_4$ (par exemple des silicates de méthyle, d'éthyle, de propyle, de butyle, des silicates mixtes de méthyle et d'éthyle) sont constitués en majeure partie de motifs de formule $OSi(OR^2)_2$ et d'une faible proportion de motifs de formules $(R^2O)_3\ SiO_{0,5}$; $R^2OSiO_{1,5}$ et $SiO_2$. Pour caractériser ces polymères, appelés polysilicates, on se base habituellement sur leur teneur en groupes alcoxy ou en silice, de préférence on les caractérise par leur teneur en silice car il est souvent plus aisé de doser la silice (par hydrolyse totale d'un échantillon) que les groupes alcoxyles. Leurs méthodes de préparation sont bien connues, elles sont décrites en particulier dans l'ouvrage "Chemistry and Technology of Silicones" de W. Noll - pages 648 à 653.

Les polysilicates ainsi préparés doivent cependant posséder, afin d'être compatibles et/ou réactifs avec les autres ingrédients mis en oeuvre pour la préparation des compositions de l'invention, la faculté de se dissoudre dans les solvants hydrocarbonés usuels tels que le toluène, le xylène, le méthylcyclohexane, dans la

proportion d'au moins 50 parties de polysilicates pour 100 parties de solvants.

On utilise de 1 à 20 parties en poids, de préférence 2 à 10 parties, de A2) pour 100 parties de A1). Les composés A2) préférés sont les polysilicates d'alkyle, éthyle, propyle et butyle.

Les catalyseurs organométalliques de durcissement A3) sont plus particulièrement les sels d'acides carboxyliques et le de métaux choisis parmi le plomb, le zinc, le zirconium, le titane, le fer, l'étain, le baryum, le calcium et le manganèse.

Le constituant A3) est de préférence un composé catalytique à l'étain, généralement un sel d'organoétain. Les sels d'organoétain utilisables sont décrits, en particulier dans l'ouvrage de NOLL, Chemistry and Technology of Silicones Academic Press (1968), page 337.

On peut également utiliser le produit de réaction d'un silicate d'alkyle ou d'un alkyltrialcoxysilane sur le diacétate de dibutylétain comme décrit dans le brevet belge BE-A-842 305.

Les sels d'étain préférés sont les bischelates d'étain (EP-A-147 323 et EP-A-235 049), les dicarboxylates de diorganoétain et en particulier les diversatates de dibutyl - ou de dioctylétain (brevet britannique GB-A-1 289 900), le diacétate de dibutyl - ou de dioctylétain, le dilaurate de dibutyl - ou dioctylétain. On utilise généralement de 0,01 à 3, de préférence de 0,05 à 2 parties de sel d'organoétain pour 100 parties de gommes A1).

La composition (A) comporte en outre de 200 à 2000 parties, de préférence de 300 à 1500 parties de diluants organiques pour 100 parties de gommes A1).

Ces diluants A4) sont, de préférence, des produits usuels commercialisés, choisis parmi :

– les hydrocarbures aliphatiques, cycloaliphatiques, aromatiques, halogénés ou non, tels que le n-heptane, le n-octane, le cyclohexane, le méthylcyclohexane, le toluène, le xylène, le mesitylène le cumène, la tétraline, le perchloroéthylène, le trichloroéthane, le tétrachloroéthane, le chlorobenzène, l'orthodichlorobenzène, le trichloroéthylène.

– les cétones aliphatiques et cycloaliphatiques tels que la méthyléthylcétone, la méthylisobutylcétone, la cyclohexanone, l'isophorone.

– les esters tels que l'acétate d'éthyle, l'acétate de butyle, l'acétate d'éthylglycol.

Les quantités de diluants introduites doivent être suffisantes pour obtenir des dispersions stables s'étalant facilement sur les substrats. Ces quantités dépendent essentiellement de la nature et de la viscosité des compositions organopolysiloxanes de départ. Elles peuvent donc varier dans de larges proportions ; néanmoins il est recommandé de fabriquer des dispersions contenant de 15 à 85 % en poids de diluants.

Le toluène, le trichloroéthylène et leurs divers mélanges possibles sont des diluants préférés.

De préférence la composition (A) comporte en outre de 1 à 50 parties, de préférence de 5 à 20 parties de charges minérales siliceuses A5) qui peuvent être choisies parmi les poudres de silice de combustion et de précipitation ou leur mélange. La silice de combustion est préférée. On peut toutefois utiliser également des charges siliceuses semi-renforçantes telles que des terres de diatomées, du quartz broyé.

Les poudres de silice de combustion et de précipitation sont bien connues, elles sont utilisées en particulier comme charges dans les compositions élastomère de silicone, vulcanisables à chaud en un caoutchouc de silicone. Ces poudres présentent une taille moyenne de particule généralement inférieure à 0,1 µm et une surface spécifique BET supérieure à 50 $m^2/g$, de préférence comprise entre 150 et 350 $m^2/g$.

Jusqu'à 70 % en poids de ces charges siliceuses A5) peuvent être remplacées par une charge non siliceuse choisie parmi le dioxyde de titane, l'oxyde d'aluminium, l'alumine hydratée, la vermiculite non expansée, le carbonate de calcium, l'oxyde de zinc, le mica, le talc, le sulfate de baryum, la chaux éteinte et l'amidon de maïs.

Ces charges non siliceuses ont préférentiellement une granulométrie inférieure à 5 µm.

La surface de l'objet est enduite d'une couche de composition (A) pour tout moyen d'enduction convenable, par exemple aérosol, pistolet, pinceau.

On peut déposer plusieurs couches si la surface n'est pas lisse (étape b)).

Sur le revêtement au moins partiellement réticulé, de préférence non complètement réticulé, on recouvre la surface revêtue de l'objet par une composition organopolysiloxane (C) réticulant par des réactions de polycondensation et utilisable pour réaliser un moulage.

Cette composition (C) peut être coulante ou non coulante.

Des compositions (C) utilisables sont en particulier celles décrites dans le brevet EP-A-283 408 cité comme référence.

Une famille préférée, dans le cadre de la présente invention, de composition (C) est constituée par les compositions à deux composantes, ou à 2 emballages comportant :

C1) une huile $\alpha$ $\omega$ dihydroxydiorganopolysiloxane dont les radicaux organiques sont des radicaux hydrocarbonés monovalents

C2) au moins un polyalcoxysilane ou le produit d'hydrolyse partielle d'un tetraalcoxysilane (silicate d'alkyle)

C3) un catalyseur organométallique de durcissement

C4) une charge minérale.

Des exemples de telles compositions sont décrites dans les brevets US-A 3 678 002, US-A 3 888 815, US-A 3 933 729, US-A 4 024 096 et GB-A 2 032 936.

Comme composés C2), on peut utiliser les composés A2) définis ci-dessus pour la composition (A).

Comme catalyseur C3), on peut utiser les catalyseurs A3) définis ci-dessus pour la composition (A).

Comme charges minérales C4), on peut utiliser les charges minérales A5) définies ci-dessus pour la composition (A).

Une sous famille de compositions (C), encore plus préférées comportent :

C1) 100 parties en poids d'au moins une huile α ω -dihydroxypolydiorganosiloxane de viscosité de 50 à 300 000 mPa.s à 25°C dont les radicaux organiques sont choisis parmi les radicaux méthyle, éthyle, vinyle, phényle et trifluoro-3,3,3 propyle, au moins 60 % en nombre étant des radicaux méthyle, jusqu'à 20 % en nombre étant des radicaux phényle, au plus 2 % étant des radicaux vinyle.

C2) 1 à 20 parties de silicate d'alkyle, dont le radical alkyle est choisi parmi les radicaux méthyle, éthyle, propyle et butyle.

C3) 0,005 à 5 parties, de préférence 0,01 à 3 parties d'un composé organoétain de durcissement.

C4) 5 à 100 parties d'au moins une charge minérale.

Dans tout ce qui suit ou ce qui précède, les pourcentages et parties sont en poids.

Les exemples suivants illustrent l'invention sans en limiter la portée.

- EXEMPLE 1 :

On veut réaliser un moule d'une statue en bronze ancien doré d'environ 80 cm de haut. On recouvre la surface à reproduire d'une première couche d'une solution à 3 % dans l'acétone de méthacrylate de méthyle PARALOID B72 commercialisée par la Société ROHM et HAAS.

On laisse sécher à l'air 24 heures et on dépose quatre couches au pinceau, en attendant 3 heures avant de passer une nouvelle couche, une composition (A) ayant la composition suivante :

- 11 parties d'une gomme α,ω-dihydroxypolydiméthylsiloxane de viscosité 3 x $10^7$ m.Pa.s à 25 °C,
- 1,5 partie d'amidon de maïs,
- 2 parties de $TiO_2$ en poudre,
- 3 parties de silice de combustion de surface spécifique BET 150 $m^2/g$,
- 2 parties de $CaCO_3$ en poudre,
- 36 parties de toluène,
- 45,5 parties de trichloroéthylène.

On catalyse 100 parties de la dispersion obtenue par simple mélange des ingrédients ci-dessus, au moyen de 3 parties d'une composition catalysante ayant la composition suivante :

- polysilicate d'éthyle : 80 parties
- alcool éthylique : 5 parties
- benzotriazole : 5 parties
- dilaurate de dibutylétain : 10 parties

Cinq heures après avoir posé la quatrième et dernière couche, on passe à la spatule une composition (C) préparée de la façon suivante :

on prépare une composition $P_1$ par mélange de :

- 100 parties d'une huile α,ω-dihydroxydiméthylpolysiloxane de viscosité 14 000 mPa.s à 25 °C,
- 70 parties d'une huile α,ω-bis(triméthylsiloxy)-diméthylpolysiloxane de viscosité 800 mPa.s à 25 °C,
- 55 parties d'une silice de combustion de surface spécifique BET 300 $m^2/g$ traitée par de l'hexaméthyldisilazane,
- 50 parties de quartz broyé de diamètre particulaire moyen 5 micromètres,
- 10 parties d'un empâtage formé de 90 parties de l'huile α,ω-dihydroxydiméthylpolysiloxane, précédemment citée, de viscosité 14 000 mPa.s à 25 °C, 5 parties d'une silice de combustion de surface spécifique BET 150 $m^2/g$ et 5 parties d'eau.

On prépare un sytème réticulant $C_1$ par mélange, à la température ambiante de :

- 7 parties au dilaurate de dibutylétain,
- 37 parties de polysilicate d'éthyle,
- 33 parties d'huile diméthylpolysiloxane, bloquée à ses deux extrémités par un radical triméthylsilyle, de viscosité 50 mPa.s à 25 °C,
- 6 parties de silice de combustion (BET = 150 $m^2/g$) traitées par l'hexaméthyldisilazane,
- 15 parties d'une huile qui est un copolymère polyoxyde d'éthylène/polyoxyde de propylène greffé sur une huile polydiméthylsiloxane bloquée triméthylesilyle,
- 2 parties de bleu outremer (colorant).

On catalyse 100 parties de composition $P_1$ en y mélangeant 5 parties de composition $C_1$.

On dépose en une ou plusieurs couches, la composition (C) de façon à obtenir une épaisseur finale de 10 mm environ.

Dès que la composition (C) est réticulée on réalise le contremoule avec du plâtre et on procède au démoulage au bout de 4 jours.

On constate que :

– la couche de résine acrylique est intacte à la surface de l'objet,

– toute la pellicule de la composition (A) se trouve intacte à l'intérieur du moule.

- EXEMPLE 2 :

On a répété les mêmes opérations qu'à l'exemple 1 sur une statue en marbre et on a obtenu un moule de qualité similaire.

**Revendications**

**1.** - Procédé de prise d'empreinte d'un objet au moyen d'une composition élastomère silicone (C) réticulant par des réactions de condensation caractérisé en ce que :

a) on enduit au préalable la surface de l'objet à l'aide d'une composition organopolysiloxane (A) comportant :

A1) - 100 parties en poids d'une gomme polydiorganosiloxane de formule :

$$R^1 \left[ O - \underset{R}{\overset{R}{\underset{|}{\overset{|}{Si}}}} \right]_n O - R^1 \qquad (I)$$

dans laquelle

– les radicaux R identiques ou différents représentent un radical hydrocarboné monovalent, au moins 80 % en nombre des radicaux R étant des radicaux méthyle ;

– les radicaux R1 sont choisis parmi un atome d'hydrogène et un radical alkyle en $C_1$-$C_4$ ;

– n est un nombre entier tel que la viscosité de la gomme de formule (1) soit supérieure à $10^6$ mPa.s à 25°C, de préférence supérieure à $10^7$ mPa.s.

A2) - 1 à 20 parties en poids d'un composé organosilicié polyalcoxylé choisi parmi

. un monomère de formule :

$$R_x\,Si \left[ (OCH_2CH_2)_a\,OR^2 \right]_{4-x} \qquad (II)$$

dans laquelle R a la signification donnée à la formule (I), ci-dessus $R^2$ est choisi parmi un radical alkyle en $C_1$ - $C_4$, x représente 0 ou 1, a représente 0 ou 1 ;

.un polymère découlant de l'hydrolyse partielle du monomère de formule $Si(OR^2)_4$, le symbole $R^2$ ayant la signification donnée à la formule (II) ci-dessus.

A3) - Une quantité efficace d'un catalyseur organo- métallique de durcissement.

A4) - 200 à 2000 parties en poids de diluants organiques inertes vis-à-vis des composés A1) et A2).

b) On laisse réticuler au moins partiellement la composition (A).

c) On recouvre ensuite la surface revêtue de l'objet par ladite composition organopolysiloxane (C) réticulant par des réactions de polycondensation, et

d) on démoule la composition (C) durcie.

**2.** - Procédé selon la revendication 1, caractérisé en ce que la composition (A) comporte en outre de 1 à 50 parties en poids de charges minérales siliceuses A5).

**3.** - Procédé selon la revendication 2, caractérisé en ce que jusqu'à 70 % en poids des charges siliceuses A5) sont remplacées par une charge non siliceuse choisie parmi le dioxyde de titane, l'oxyde d'aluminium, l'alumine hydratée, la vermiculite non expansée, le carbonate de calcium, l'oxyde de zinc, le mica, le talc, le sulfate de baryum, la chaux éteinte et l'amidon de maïs.

**4.** - Procédé selon l'une quelconque des revendications précédentes, caractérisé en ce que dans la formule (I) $R^1$ est H, R est un radical méthyle et la gomme silicone A1) a une viscosité supérieure à 10 millions de mPa.s à 25°C.

**5.** - Procédé selon l'une quelconque des revendications précédentes caractérisé en ce que A2) est un polysilicate d'alkyle dont le radical alkyle est choisi parmi les radicaux méthyle, éthyle, propyle et butyle et en ce que A3) est un sel d'organoétain.

**6.** - Procédé selon l'une quelconque des revendications précédentes, caractérisé en ce que le diluant A4) organique est choisi parmi le toluène, le trichloroéthylène et leurs mélanges.

**7** - Procédé selon l'une quelconque des revendications précédentes, caractérisé en ce que la composition (C) comporte :

C1) 100 parties en poids d'au moins une huile $\alpha$ $\omega$ -dihydroxypolydiorganosiloxane de viscosité de 50 à 300 000 mPa.s à 25°C dont les radicaux organiques sont choisis parmi les radicaux méthyle, éthyle, vinyle, phényle et trifluoro-3,3,3 propyle, au moins 60 % en nombre étant des radicaux méthyle, jusqu'à 20 % en nombre étant des radicaux phényle, au plus 2 % étant des radicaux vinyle.

C2) 1 à 20 parties de silicate d'alkyle, dont le radical alkyle est choisi parmi les radicaux méthyle, éthyle, propyle et butyle.

C3) 0,005 à 5 parties, de préférence 0,01 à 3 parties d'un composé organoétain de durcissement.

C4) 5 à 100 parties d'au moins une charge minérale.

**8.** - Procédé selon l'une quelconque des revendications précédentes, caractérisé en ce que la surface de l'objet a été préalablement enduite d'une couche de résine synthétique.

**9.** - Procédé selon la revendication 9, caractérisé en ce que la résine synthétique est une résine acrylique.

Office européen des brevets

# RAPPORT DE RECHERCHE EUROPEENNE

Numero de la demande

EP 91 42 0022

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 914 369 (F.J. MODIC et al.)<br>* Résumé; colonne 1, ligne 20 - colonne 2, ligne 55; très spécialement colonne 3, lignes 47-62; colonne 4, lignes 55-62; colonne 5, lignes 19-48; revendications 1-5; spécialement revendications 9-12 * | 1-9 | B 29 C 33/40<br>C 08 K 5/54 //<br>B 29 K 83:00 |
| Y | EP-A-0 332 544 (RHONE-POULENC CHIMIE)<br>* Résumé; page 3, ligne 14 - page 4, ligne 63; revendications 1-9 * | 1-7 | |
| A | FR-A-2 014 172 (THE GOODYEAR TIRE & RUBBER CO.)<br>* Page 5, lignes 21-36 * | 1 | |
| A<br>Y | DE-A-2 018 334 (DOW CORNING CORP.)<br>* Revendications * | 1<br>8,9 | |
| A | FR-A-2 108 040 (GENERAL ELECTRIC CO.) | 1,7 | |

DOMAINES TECHNIQUES RECHERCHES (Int. Cl.5)

B 29 C
C 08 K

Le présent rapport a été établi pour toutes les revendications

| Lieu de la recherche | Date d'achèvement de la recherche | Examinateur |
|---|---|---|
| LA HAYE | 14-05-1991 | MOLTO PINOL F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)